# EUROPEAN PATENT SPECIFICATION

(11) **EP 1 755 369 B1**
(45) Date of publication and mention of the grant of the patent: **03.10.2012**
(21) Application number: 05747005.6
(22) Date of filing: 24.05.2005
(51) Int. Cl.: A01B 29/04

(54) **A SOIL TREATMENT APPARATUS**
BODENBEHANDLUNGSVORRICHTUNG
APPAREIL DE TRAITEMENT DU SOL

(30) Priority: 16.06.2004 GB 0413462
(43) Date of publication of application: 28.02.2007
(73) Proprietor: Simba International Ltd, Sleaford, Lincolnshire NG34 7EW (GB)
(72) Inventor: WRIGHT, Philip, c/o Simba International Ltd., Sleaford, Lincolnshire NG34 7EW (GB)
(74) Representative: Croston, David
(86) International application number: PCT/GB2005/002041
(87) International publication number: WO 2005/122742

(56) References cited:
- EP-A- 0 367 992
- EP-A- 1 374 659
- WO-A-02/32209
- FR-A- 2 563 683
- FR-A- 2 793 646

## Description

The invention relates to a soil treatment apparatus and particularly, although not exclusively limited to, a soil consolidation apparatus. The invention also relates to a method of manufacturing a soil treatment apparatus.

It is known to provide a press cultivator for breaking down and consolidating ploughed ground prior to sowing the seeds. Such press cultivators conventionally comprise one or more rows of press rings which consolidate and slice the clods remaining from ploughing, facilitating subsequent weathering effects and enabling the soil to be broken down into a seed bed more easily. The benefit of firming the soil profile, after disturbance by plough or disc, is to make subsequent trafficking and cultivation easier and more effective and to render the soil profile more effective in accepting water by improving capillary action.

Traditional press cultivators used spoked cast-iron press rings which were disadvantageous because they were heavy and prone to wear. An improved press ring was proposed in applicants British patent No.2323511. In GB2323511 a press ring for an agricultural machine comprises two opposing dish-like members, each having a substantially circular base and an outwardly curving peripheral wall. The wall comprises a wall portion extending radially and axially out from the base and a ground cutting rim portion extending substantially radially out from the wall portion. The dish-like members are provided concave with respect to one another held together by clamping on an axle. The benefits of that roller include the provision of a corrugated soil profile which is weather proof, the cutting of clods by virtue of the peripheral rim and the crushing and breaking down of clods with the wall portion. However, such rings are still relatively heavy which limits their application to larger trailed machines. It would be desirable to provide a system which could operate on smaller hitch mounted machines, the weight of the press ring on an axle is often too great for the tractor pulling the equipment safely to raise the equipment above the ground for turns and for transportation.

The assembly of the rings on an axle is a skilled operation which increases the complexity and cost of the assembly. The known rings tended to leave a small unconsolidated ridge of soil and, in turn, the space between pairs of discs can fill with soil which requires the addition of a scraper. Also, the solid nature of the ring cannot absorb shock loads for example when the cultivator strikes a stone. Still further, the specific mounting arrangement for the press rings limits the axial length for a set of rings to two metres which increases the overall frame complexity.

It is also known to mount conventional cast-iron press rings on an axle with rubber tyres carried on the axle therebetween. The tyres serve to restrict the material which may enter the space between the rings and also consolidates the ground between the rings. However, that does not overcome the problem of high weight and the rings are still rigidly mounted to the axle so they cannot absorb shock-loading. It is also known to mount a wheel on an axle having a wheel hub and an elastomeric tyre wherein a protruding rim is mounted directly to the hub. Such an arrangement was made by the Otico Company of Longueville, France under their trade mark OTIFLEX. Again, when the protruding rim contacted a rigid object, such as a stone, the shock of that contact was transmitted directly to the axle and there was no way for that implement to absorb the shock.

It is an object of the invention to provide an improved soil treatment apparatus.

According to the present invention, there is provided a soil treatment apparatus according to claim 1.

Although it is known to clamp together dish-like members to form press rings, as described in GB2323511 to provide a "self-sharpening" function whereby the dish members are pushed together when the rim wears down so that wear at the peripheral edge is taken up, it is not known to use an elastomeric material to provide that clamping arrangement. Use of an elastomer has several advantages over the known clamping method.

Firstly, use of the elastomeric clamping arrangement between pairs of rings on an axle ensures even distribution of the compressive load across an axle. It also ensures that the centres on which the rings are aligned are maintained, regardless of wear.

Furthermore, in the previous arrangement, when the rings were initially installed on the axle and clamped up, there was a tremendous amount of energy stored in the rings and clamps which meant that disassembly of the device in that state required exceptional care to be taken to avoid damage to equipment or injury. Only when the rings were worn down was that stored energy used up. By using an elastomer, although the energy is stored in the elastomer, there is considerable hysteresis in its behaviour. Thus, the elastomer will return to its original position when the compression is released but only after some time has passed which is sufficient to avoid the kind of hazard that may be present in the previous system.

The use of an elastomer also allows the ridge formed between rings to be rolled and by moulding the elastomer into particular forms an appropriate ridge profile can be selected.

Each ring part comprises substantially circular base and an outwardly curving peripheral wall. The wall comprises a wall portion extending radially and axially out from the base and a ground cutting rim portion extending substantially radially out from the wall portion. The ring parts are provided concave with respect to one another and are held together by clamping on an axle.

The first and/or second ring parts may be mounted on the elastomeric clamping arrangement.

The apparatus is preferably arranged on an axle. Where the ring parts are mounted on the elastomeric clamping arrangement, the elastomeric clamping arrangement is preferably arranged on the axle and the ring parts mounted on the elastomeric clamping arrangement.

The elastomeric clamping arrangement preferably comprises a first elastomeric piece on one side of the ring and a second elastomeric piece on the other side of the ring.

Most preferably, the soil treatment apparatus comprises a ring comprising first and second ring parts arranged on an axle, an elastomeric clamping arrangement comprising a first elastomeric piece on one side of the ring and a second elastomeric piece on the other side of the ring, a first stop attachable to the axle on one side of the ring against which the elastomeric clamping arrangement abuts and a second stop attachable to the axle on the other side of the ring against which the elastomeric clamping arrangement abuts. A plurality of sets of ring parts and elastomeric clamping arrangements may be arranged on an axle between the two stops. The axle preferably has an outer diameter greater than half the diameter of the ring. One or both of the stops may be end flanges.

The ring parts are preferably made from wear resistant steel. The elastomeric clamping arrangement may be made from any suitable elastomer. Preferably natural or synthetic rubber is used, most preferably, recycled vehicle tyre material is used.

Where two rings are provided, the elastomeric clamping arrangement comprises a first elastomeric piece on one side of the first ring, a second elastomeric piece between the two rings and a third elastomeric piece on the opposite side of the second ring. Where more than two rings are provided, a single elastomeric piece is provided between each pair of rings.

It is envisaged within the scope of the invention that the outermost ring on an axle abuts directly against the respective stop or that an elastomeric piece be arranged between the respective stop and end ring.

A soil treatment apparatus in accordance with the above invention will now be described in detail by way of example and with reference to the accompanying drawings, in which:
Fig.1 is a cross-sectional view of a soil treatment apparatus in accordance with the invention,
Fig.2 is an end elevation of the apparatus of Fig.1,
Fig.3 is a cross-sectional view of part of the apparatus of Figs. 1 and 2 shown to a larger scale,
Figs.4a and b are side and end elevations of a ring part used in the apparatus of Figs. 1 to 3,
Figs.5a and b are side and end elevations of an elastomeric piece used in the apparatus of Figs.1 to 3,
Fig.6 is a cross-sectional view of a soil treatment apparatus in accordance with the invention,
Fig.7 is an end elevation of the apparatus of Fig.6,
Fig.8 is a cross-sectional view of part of the apparatus of Figs.6 and 7 shown to a larger scale,
Fig.9a and b are side and end elevations of a ring part used in the apparatus of Figs.6 to 8, and
Figs.10a, b, c are side and end elevations and a cross-section of an elastomeric piece used in the apparatus of Figs.6 to 8.

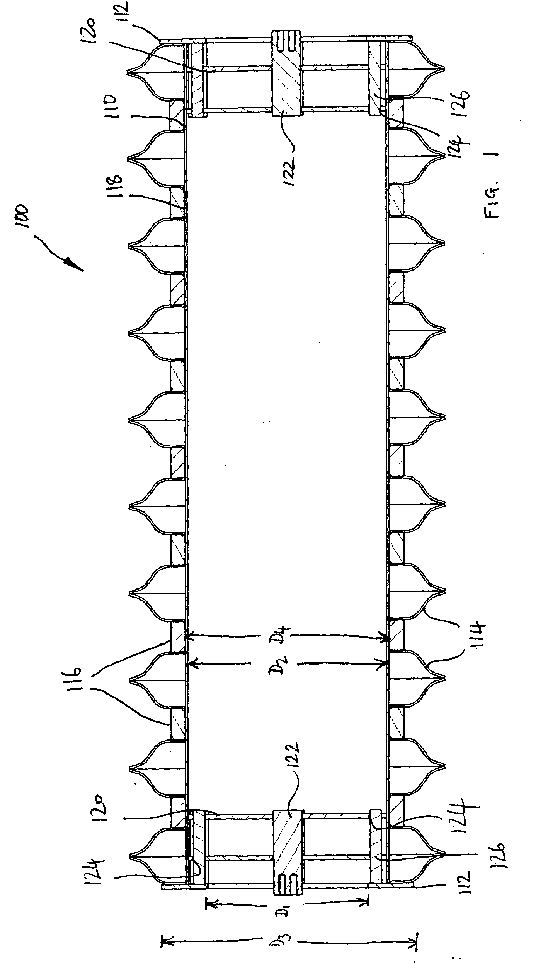

In Fig.1, a soil treatment roller is indicated general at 100. The roller 100 comprises a roller core 110, end plates 112, a series of rings 114 spaced apart and clamped together by means of annular elastomeric clamping members 116.

The roller core 110 comprises a thin walled, steel, elongate, hollow cylinder 118. At each end of the cylinder 118, a plug assembly 120 closes off the end. Each plug assembly 120 carries a bearing assembly 122 shown schematically in Fig.1. Each plug assembly 120 also includes four screw-threded apertures 124 (two shown). The apertures 124 receive bolts 126 which secure the end plates 112 respectively.

Each end plate 112 is in the form of a flat steel annular disc which has an inner diameter D 1 which is less than the inner diameter D2 of the roller core 118 and an outer diameter D3 which is greater than the outer diameter D4 of the roller core 118.

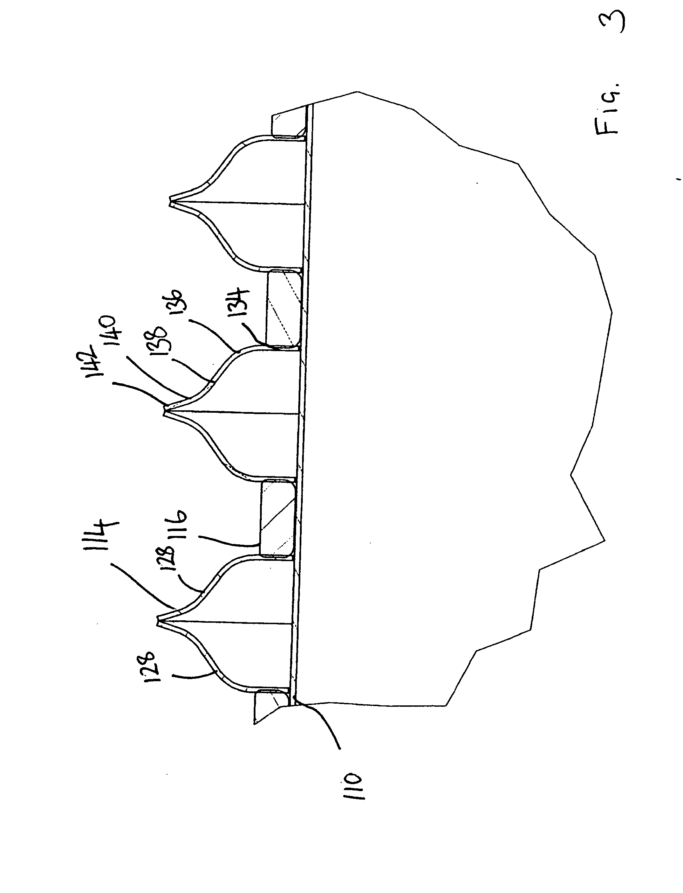

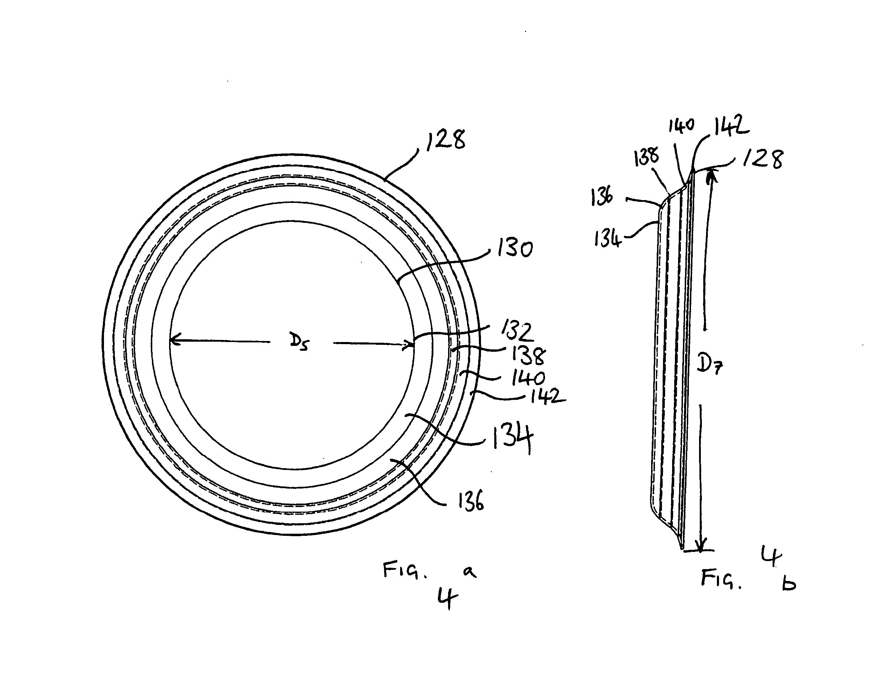

Each ring 114 comprises two ring parts 128 (see Figs.3, 4a and 4b).

Each ring part 128 is circular with a circular central aperture 130. The circular central aperture 130 defines an inner rim 132 having a diameter D5 which is a clearance fit around the outer diameter D4 of the roller core 118.

Each ring part 128 comprises a radially extending base part 134 which curves via a radiused part 136 into an axially and radially extending wall part 138. This, in turn, curves via radiused part 140 into a substantially axially extending rim part 142. Whilst the rim part is described as substantially radially extending, it can be seen from Fig.3 that the rim part 142 does extend with a smaller axial component. The importance of this feature will be discussed below.

In order to form a ring 114, two ring parts 128 are arranged so that their rim parts 142 abut each other and in cross-section have the form of an onion dome in section. The rim parts 142 are arranged to touch at their outermost edge and the slight axial component described above creates a tapered rim to the ring 114. This profile is advantageous since it cuts clods and propagates cracks through the soil surface which serves to prevent top soil run-off. The axially and radially extending wall part 138 creates a consolidated ridge.

The ring parts 128 are not secured together by welding. Rather, they are clamped together by means of an axially compressive force provided by a combination of the end plates 112 and the elastomeric clamping pieces 116.

In use, the ring parts 128 are mounted on the roller core 118 with their rim parts 142 abutting each other so as to form rings 114. Between each ring 114, ie between each pair of ring parts 128, an annular elastomeric member 116 is arranged around the roller core 118.

The annular elastomeric member 116 has an outer diameter D6 which is less than the outer diameter D7 of the ring parts 128. The inner diameter D8 of the annular member 116 is preferably substantially similar to the outer diameter D4 of the roller core 118. In fact, it may be preferable for D8 to be slightly smaller than D4 so that the annular member 116 has to be stretched slightly in order to fit onto the roller 118.

One of the end caps 112 is secured to the roller 110 and the rings 114 and interleaved annular elastomeric members 116 are arranged on the roller 110. The rings and the elastomeric members 116 are dimensioned such that the final ring 114 protrudes over the end of the roller core 118. An axial compression is applied to the rings 114 and the elastomeric members 116 to allow the other end cap 112 to be arranged on the roller 110 and secured thereto. Once the end cap 112 is secured to the roller 110, the rings 114 are held in axial compression by the end caps 112 and the elastomeric members 116.

As described above, the provision of elastomeric members to store the energy of the compressive load results in a safer system when the apparatus is dismantled because of the hysteresis displayed by the elastomeric material. Likewise, the elastomeric member 116 can be used to roll the soil between the ring members 114 and a variety of profiles may be applied to the outer surface of the elastomeric annular member 116 so provide an appropriately profiled ridge member between the gullies formed by the rings 114. The elastomeric members 116 also provide a seal preventing soil ingress into the rings 114.

As the soil treatment roller 100 is used, the rim parts 142 of the ring parts 128 will begin to wear. As the tips of the rims 142 begin to wear, those parts will be held together because the elastomeric members which have been clamped up by the end plates 112 will maintain the compressive force holding the rim parts together. This provides a self-sharpening function similar to that shown in GB2323511 but with the advantage that the centres around which the rings 114 were originally located are maintained and that the axial compressive force is distributed evenly across the width of the roller 110. Eventually, the rim parts 142 wear to such an extent that replacement is required. However, the self-sharpening provided by the elastomeric clamping arrangement extends the life of the rings over, for example, welded rings.

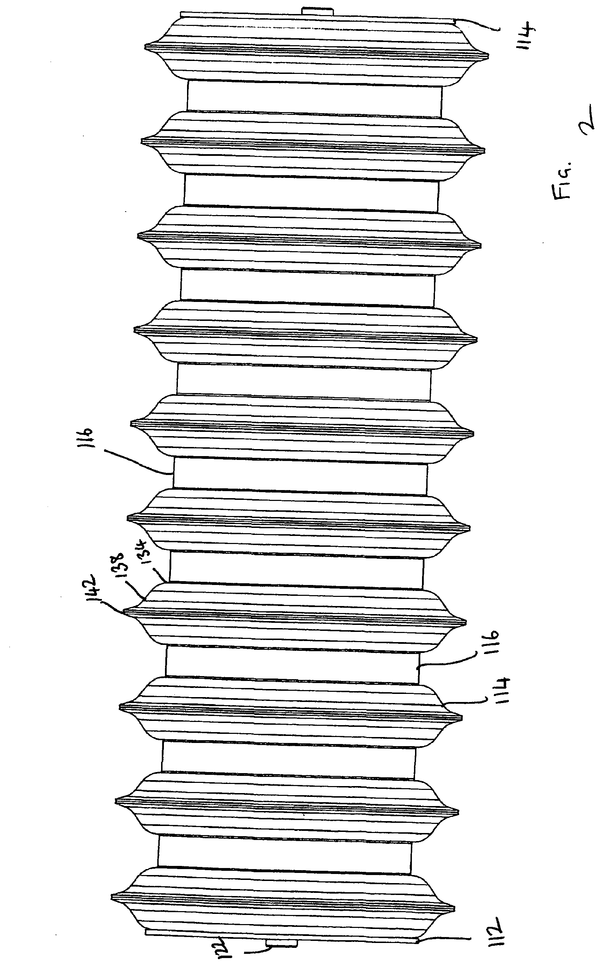

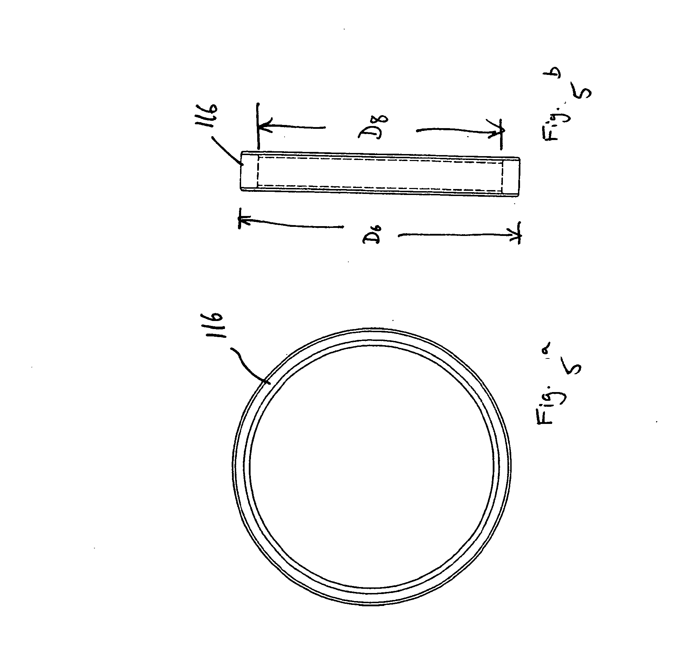

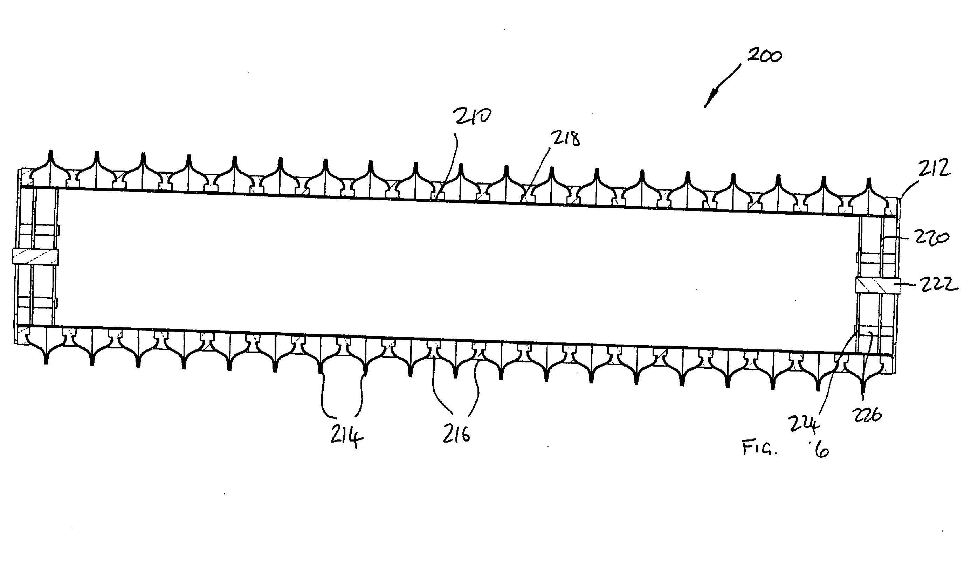

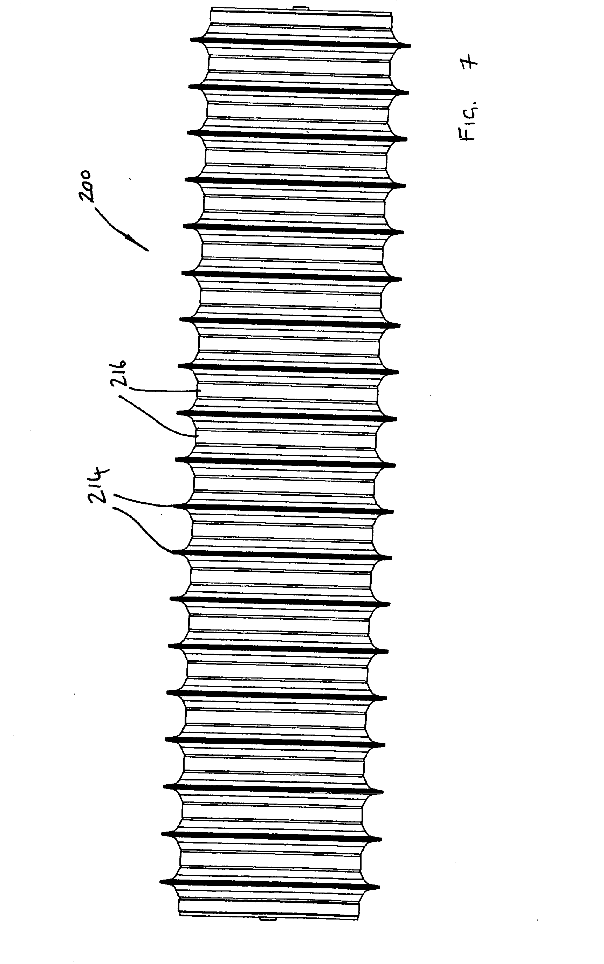

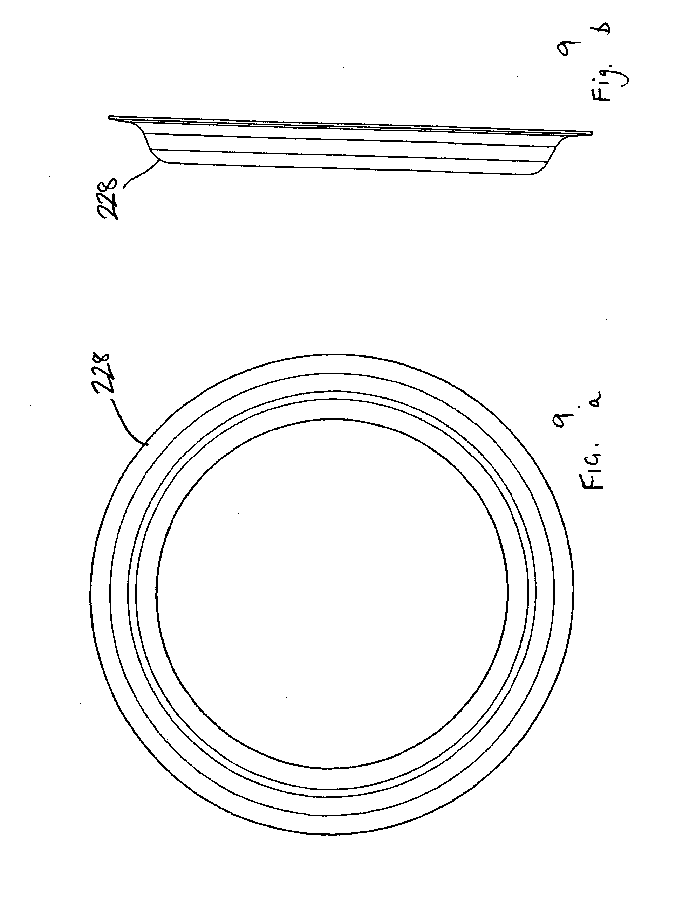

A soil treatment roller 200 is shown in Figs.6-10 and parts corresponding to parts in Figs.1-5 are numbered 100 higher.

The roller 200 is substantially similar to the roller 100 of Figs.1-5 and is not described in detail.

The roller 200 also comprises a roller core 218 closed off by end plates 212 with a series of rings 214 which are held with a compressive axial load effected by the ends plates 212 and annular elastomeric members 216.

The ring parts 228 are substantially identical to the rings part 128 of Figs.1-5.

The annular elastomeric members 216 are slightly different from those shown in Figs.1-5. In particular, whereas the annular elastomeric members 116 in Figs.1-5 had a substantially rectangular cross-sectional profile, the cross-sectional profile of the annular elastomeric members 216 is in the form of a capstan.

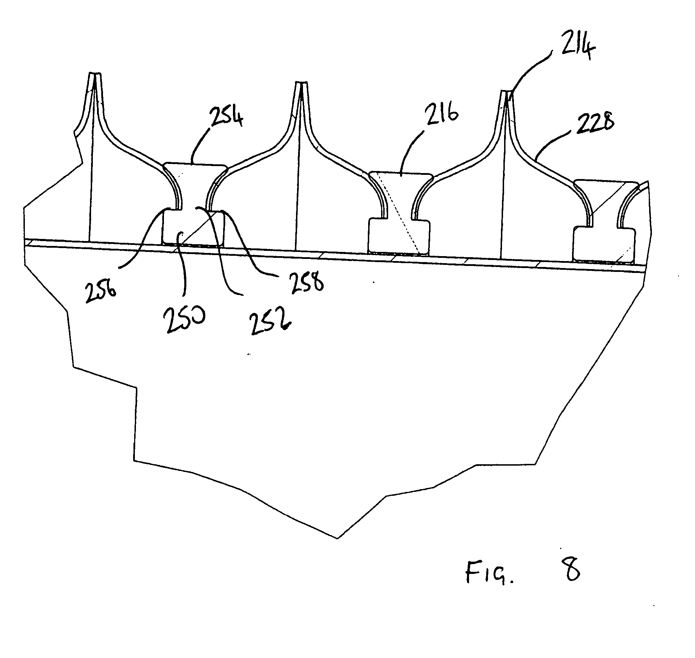

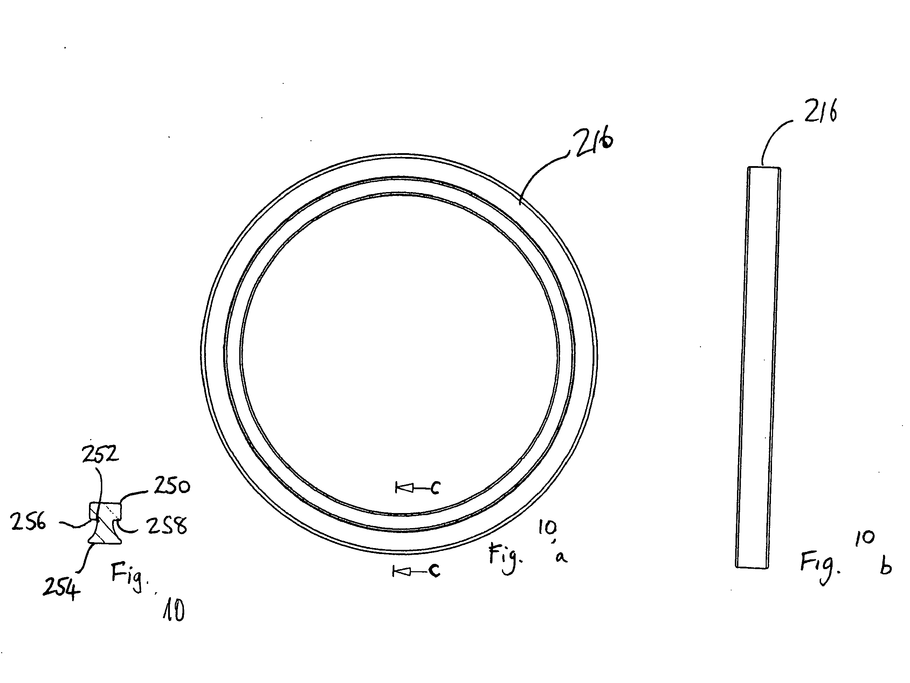

The profile is illustrated in Fig.10c which is cross-section taken on line C-C in Fig.10a. The profile comprises a substantially rectangular portion 250 with a narrower projecting part 252 which flares outwardly towards the outer peripheral edge 254 of the annular member. That defines a pair of shoulders 256, 258 arranged one each side of the projecting portion 252. The function of the shoulders 256, 258 in the annular member 216 is to provide a mounting for the ring parts 228 (see Fig.8).

As mentioned above, it can be advantageous to mount the rings onto the roller via the elastomeric member as that provides a mechanism for absorbing shock loading on the rings in the event that they encounter, for example, submerged rocks or boulders. Thus, in the roller of Figs.6 to 10, the rings 214 are mounted on the elastomeric members 216 in the manner shown and they are also axially compressed by means of the elastomeric members 216 and the end plates 212. In that way, the roller of Figs.6 to 10 enjoys the advantages of the device of Figs. 1 to 5.

The ring parts 128, 228 are preferably made from wear resistant steel and the elastomeric members 116, 216 are made from a suitable elastomeric material, such as natural or synthetic rubber or a mixture thereof. Recycled vehicle tyre material may be used for the elastomeric material.

## Claims

1. A soil treatment apparatus (100) comprising a metal ring (114) and an elastomeric clamping arrangement (116) arranged to provide an axial compressive force on the ring (114),the ring (114) comprising first and second parts (128), each part (128) comprising a circular base, a radially and axially extending wall part (138) and a substantially radially extending rim part (142), **characterised in that** the first and second parts (128) are arranged so that their respective rim parts (142) are in contact.

2. A soil treatment apparatus (100) according to claim 1, in which the first and/or second ring parts (128) are mounted on the elastomeric clamping arrangement (116).

3. A soil treatment apparatus (100) according to any preceding claim, in which the apparatus is arranged on an axle (118).

4. A soil treatment apparatus (100) according to claim 3, in which the ring (114) is mounted on the elastomeric clamping arrangement (118) and the elastomeric clamping arrangement (118) is mounted on the axle (118).

5. A soil treatment apparatus (100) according to any preceding claim, in which the elastomeric clamping arrangement (116) comprises a first elastomeric piece (116) on one side of the ring and a second elastomeric piece (116) on the other side of the ring.

6. A soil treatment apparatus (100) according to any preceding claim, in which the soil treatment apparatus comprises a ring (114) comprising first and second ring parts (128) arranged on an axle (118), an elastomeric clamping arrangement (116) comprising a first elastomeric piece (116) on one side of the ring (114) and a second elastomeric piece (116) on the other side of the ring (114), a first stop (112) attachable to the axle (118) on one side of the ring (114) against which the elastomeric clamping arrangement (116) abuts and a second stop (112) attachable to the axle (118) on the other side of the ring (114) against which the elastomeric clamping arrangement (116) abuts.

7. A soil treatment apparatus (100) according to claim 6, in which a plurality of sets of ring parts (128) and elastomeric clamping arrangements (116) is arranged on an axle (118) between the two stops.

8. A soil treatment apparatus (100) according to claim 3, 4, 6 or 7 in which the diameter of the axle (118) is greater than half of the diameter of the ring (114).

9. A soil treatment apparatus (100) according to claim 3, 4, 6, 7 or 8 in which one or both of the stops (112) is an end flange.

10. A soil treatment apparatus (100) according to any preceding claim in which the or each ring (114) is made from wear resistant steel.

11. A soil treatment apparatus (100) according to any preceding claim in which the elastomer used in the elastomer clamping arrangement (116) is either natural or synthetic rubber or a mixture of the two.

12. A soil treatment apparatus (100) according to claim 11, in which the elastomer is made from recycled vehicle tyres.

13. A soil treatment apparatus (100) according to any preceding claim, in which two rings (114) are provided and the elastomeric clamping arrangement comprises a first elastomeric piece (116) on one side of the first ring (114), a second elastomeric piece (116) between the two rings (114) and a third elastomeric piece (116) on the opposite side of the second ring (114).

14. A soil treatment apparatus (100) according to any preceding claim, in which more than two rings (114) are provided and a single elastomeric piece (116) is provided between each pair of rings (114).

## Patentansprüche

1. Bodenbearbeitungsvorrichtung (100) mit einem Metallring (114) und einer Elastomer-Klemmeinrichtung (116), die angeordnet ist, um eine axiale Druckkraft auf den Ring (114) auszuüben, wobei der Ring (114) aufweist einen ersten und einen zweiten Teil (128), wobei jeder Teil (128) aufweist eine Ringbasis, einen sich radial und axial erstreckenden Wandteil (138) und einen sich im Wesentlichen radial erstreckenden Randteil (142), **dadurch gekennzeichnet, dass** der erste und der zweite Teil (128) derart angeordnet sind, das ihre jeweiligen Randteile (142) sich berühren.

2. Bodenbearbeitungsvorrichtung (100) gemäß Anspruch 1, bei der der erste und/oder der zweite Ringteil (128) an der Elastomer-Klemmeinrichtung (116) angebracht ist.

3. Bodenbearbeitungsvorrichtng (100) gemäß irgendeinem der vorhergehenden Ansprüche, bei der die Vorrichtung auf einer Achse (118) angeordnet ist.

4. Bodenbearbeitungsvorrichtung (100) gemäß Anspruch 3, bei der der Ring (114) an der Elastomer-Klemmeinrichtung (118) angebracht ist und die Elastomer-Klemmeinrichtung (118) auf der Achse (118) angebracht ist.

5. Bodenbearbeitungsvorrichtng (100) gemäß irgendeinem der vorhergehenden Ansprüche, bei der die Elastomer-Klemmeinrichtung (116) aufweist ein erstes Elastomer-Stück (116) an der einen Seite des Rings und eine zweites Elastomer-Stück an der anderen Seite des Rings.

6. Bodenbearbeitungsvorrichtng (100) gemäß irgendeinem der vorhergehenden Ansprüche, bei der die Bodenbearbeitungsvorrichtung aufweist einen Ring (114), der aufweist einen ersten und einen zweiten Teil (128), die auf einer Achse (118) angeordnet sind, eine Elastomer-Klemmeinrichtung (116), die aufweist ein erstes Elastomer-Stück (116) an der einen Seite des Rings (114) und ein zweites Elastomer-Stück (116) an der anderen Seite des Rings (114), einen ersten Stopper (112), der auf der Achse (118) auf der einen Seite des Rings (114) anbringbar ist und gegen welchen die Elastomer-Klemmeinrichtung (116) anliegt, und einen zweiten Stopper (112), der auf der Achse (118) auf der anderen Seite des Rings (114) anbringbar ist und gegen welchen die Elastomer-Klemmeinrichtung (116) anliegt.

7. Bodenbearbeitungsvorrichtung (100) gemäß Anspruch 6, bei der eine Mehrzahl von Sätzen von Ringteilen (128) und Elastomer-Klemmeinrichtungen (116) auf der Achse (118) zwischen den Stoppern angeordnet ist.

8. Bodenbearbeitungsvorrichtung (100) gemäß Anspruch 3, 4, 6 oder 7, bei der der Durchmesser der Achse (118) größer als die Hälfte des Durchmessers des Rings (114) ist.

9. Bodenbearbeitungsvorrichtung (100) gemäß Anspruch 3, 4, 6, 7 oder 8, bei der einer oder beide Stopper (112) ein Endflansch ist.

10. Bodenbearbeitungsvorrichtng (100) gemäß irgendeinem der vorhergehenden Ansprüche, bei der der oder jeder Ring (114) aus einem verschleißresistenten Stahl ist.

11. Bodenbearbeitungsvorrichtng (100) gemäß irgendeinem der vorhergehenden Ansprüche, bei der der Elastomer, welcher in der Elastomer-Klemmeinrichtung (116) verwendet wird, entweder natürlicher oder synthetischer Gummi oder einer Mischung von beiden ist.

12. Bodenbearbeitungsvorrichtung (100) gemäß Anspruch 11, bei der der Elastomer aus recycelten Fahrzeugreifen herstellt ist.

13. Bodenbearbeitungsvorrichtng (100) gemäß irgendeinem der vorhergehenden Ansprüche, bei der zwei Ringe (114) vorgesehen sind und die Elastomer-Klemmeinrichtung aufweist ein erstes Elastomer-Stück (116) an einer Seite des ersten Rings, ein zweites Elastomer-Stück (116) zwischen den beiden Ringen (114) und ein drittes Elastomer-Stück (116) an der gegenüberliegenden Seite des zweiten Rings (114).

14. Bodenbearbeitungsvorrichtng (100) gemäß irgendeinem der vorhergehenden Ansprüche, bei der mehr als zwei Ringe (114) vorgesehen sind und ein einzelnes Elastomer-Stück (116) zwischen jedem Paar von Ringen (114) angeordnet ist.

## Revendications

1. Appareil de traitement du sol (100), comprenant un anneau métallique (114) et un ensemble de serrage en élastomère (116) disposé pour fournir une force de compression axiale sur l'anneau (114), l'anneau (114) comprenant des première et seconde parties (128), chaque partie (128) comprenant une base circulaire, une partie de paroi s'étendant radialement et axialement (138) et une partie de rebord s'étendant sensiblement radialement (142), **caractérisé en ce que** les première et seconde parties (128) sont disposées de sorte que leurs parties de rebord respectives (142) soient en contact.

2. Appareil de traitement du sol (100) selon la revendication 1, dans lequel les première et/ou seconde parties annulaires (128) sont montées sur l'ensemble de serrage en élastomère (116).

3. Appareil de traitement du sol (100) selon l'une quelconque des revendications précédentes, dans lequel l'appareil est disposé sur un essieu (118).

4. Appareil de traitement du sol (100) selon la revendication 3, dans lequel l'anneau (114) est monté sur l'ensemble de serrage en élastomère (118) et l'ensemble de serrage en élastomère (118) est monté sur l'essieu (118).

5. Appareil de traitement du sol (100) selon l'une quelconque des revendications précédentes, dans lequel l'ensemble de serrage en élastomère (116) comprend une première pièce en élastomère (116) d'un côté de l'anneau et une seconde pièce en élastomère (116) de l'autre côté de l'anneau.

6. Appareil de traitement du sol (100) selon l'une quelconque des revendications précédentes, dans lequel l'appareil de traitement du sol comprend un anneau (114) comprenant des première et seconde parties annulaires (128) disposées sur un essieu (118), un ensemble de serrage en élastomère (116) comprenant une première pièce en élastomère (116) d'un côté de l'anneau (114) et une seconde pièce en élastomère (116) de l'autre côté de l'anneau (114), une première butée (112) pouvant être fixée à l'essieu (118) d'un côté de l'anneau (114), contre laquelle bute, l'ensemble de serrage en élastomère (116) bute et une seconde butée (112) pouvant être fixée à l'essieu (118) de l'autre côté de l'anneau (114), contre laquelle bute l'ensemble de serrage en élastomère (116).

7. Appareil de traitement du sol (100) selon la revendication 6, dans lequel une pluralité d'ensembles de parties annulaires (128) et d'ensembles de serrage en élastomère (116) est disposée sur un essieu (118) entre les deux butées.

8. Appareil de traitement du sol (100) selon la revendication 3, 4, 6 ou 7, dans lequel le diamètre de l'essieu (118) est supérieur à la moitié du diamètre de l'anneau (114).

9. Appareil de traitement du sol (100) selon la revendication 3, 4, 6, 7 ou 8, dans lequel une ou les deux butées (112) sont une bride d'extrémité.

10. Appareil de traitement du sol (100) selon l'une quelconque des revendications précédentes, dans lequel le ou chaque anneau (114) est fabriqué en un acier résistant à l'usure.

11. Appareil de traitement du sol (100) selon l'une quelconque des revendications précédentes, dans lequel l'élastomère utilisé dans l'ensemble de serrage en élastomère (116) est un caoutchouc naturel ou synthétique ou un mélange des deux.

12. Appareil de traitement du sol (100) selon la revendication 11, dans lequel l'élastomère est fabriqué dans des pneus de véhicule recyclés.

13. Appareil de traitement du sol (100) selon l'une quelconque des revendications précédentes, dans lequel deux anneaux (114) sont prévus et l'ensemble de serrage en élastomère comprend une première pièce en élastomère (116) d'un côté du premier anneau (114), une deuxième pièce en élastomère (116) entre les deux anneaux (114) et une troisième pièce en élastomère (116) du côté opposé du second anneau (114).

14. Appareil de traitement du sol (100) selon l'une quelconque des revendications précédentes, dans lequel plus de deux anneaux (114) sont prévus et une seule pièce en élastomère (116) est prévue entre chaque paire d'anneaux (114).
